# EUROPEAN PATENT APPLICATION

(11) **EP 4 822 722 A1**
(43) Date of publication of application: **14.10.2026**
(21) Application number: 25170106.6
(22) Date of filing: 11.04.2025
(51) Int. Cl.: H01F 36/00, H01F 3/08, H01F 1/34, H01F 3/14, H01F 27/255, H01F 41/02, B64D 27/30, H02K 55/00

(54) **A TRANSFORMER FOR USE AT CRYOGENIC TEMPERATURES, USE OF A TRANSFORMER AND METHOD OF PRODUCING A TRANSFORMER FOR USE AT CRYOGENIC TEMPERATURES**

(71) Applicant: Airbus S.A.S., 31700 Blagnac (FR)
(72) Inventor: Steiner, Gerhard, 82024 Taufkirchen (DE); Kapaun, Florian, 82024 Taufkirchen (DE); Dahmen, Christopher, 82024 Taufkirchen (DE)
(74) Representative: KASTEL Patentanwälte PartG mbB

(57) **Abstract**

In order to provide a compact lightweight transformer for use at cryogenic temperatures, the transformer comprises a ferrite core with an air gap and comprising a relative permeability at 77K, µᵣ(77K), wherein 50 ≤ µᵣ (77K) ≤ 1000, at least one primary winding and at least one secondary winding.

## Description

The present invention relates to a transformer for use at cryogenic temperatures, use of a transformer in a circuit operating at cryogenic temperatures and method of producing a transformer for use at cryogenic temperatures.

For some applications, e.g. driving an electric motor formed of superconductive material, it may be desirable to place some or all of the electronic circuitry for driving the electric motor in the part of the application that is at cryogenic temperatures rather than in the part of the application that is a room temperature.

The published US patent application US 2022/0225301 A1 describes a magnet assembly comprising a superconducting coil, a cryogenic system, a DC voltage source, a SMPS (Switched Mode Power Supply), current leads, and a controller. The cryogenic system comprises a cryostat and is configured to maintain the superconducting coil at an operating temperature below the critical temperature of the superconductor. The DC voltage source is located outside the cryostat. The SMPS is located inside the cryostat and configured to supply power from the DC voltage source to the superconducting coil.

Circuitry that is developed and provides certain functions at room temperature, operates differently at cryogenic temperatures, if at all. It is, therefore, an object of the invention to provide a small, lightweight transformer suitable for use at cryogenic temperatures.

This object is solved by the subject matter of the independent claims. Further advantageous developments are the subject matter of the dependent claims.

According to the invention, a transformer for use at cryogenic temperatures is provided. The transformer comprises a ferrite core with an air gap and comprises a relative permeability at 77K, µᵣ(77K), wherein 50 ≤ µᵣ (77K) ≤ 1000, at least one primary winding and at least one secondary winding.

The invention provides a ferrite core-based transformer suitable for applications operating in the cryogenic temperature range. Herein cryogenic temperatures and the cryogenic temperature range is defined as 2K to 230K. The transformer may be operated in a temperature of range of 25K to 150K, which corresponds to the operation range of Liquid hydrogen.

The ferrite core-based transformer of the invention minimizes the weight, size and mounting effort for a transformer operated at cryogenic temperatures while taking into account the temperature dependent reduction of the µr value of the ferrite material.

Most power electronics topologies need a minimum primary inductance of the transformer. In a cryogenic environment, the relative permeability µr of ferrite decreases. For some ferrites, the relative permeability µr may even become 0, so that these ferrites are not suitable for use in the transformer according to the invention Therefore, transformers which operate acceptably at industrial or automotive temperature ranges, e.g. -40°C to 100°C, are not usable in a cryogenic environment due to this reduction in the relative permeability of the ferrite core.

To overcome this issue, a temperature - stable airgap is introduced into the ferrite core to minimize the impact of the reduction in relative permeability and to ensure a minimum and acceptable inductance. Therefore, the design of small, lightweight and easy-to-mount transformers with coil formers for isolated power supplies is provided. These transformers are also suitable for low power ranges. Such compact transformer designs, especially if multiple windings are used, cannot be produced with available wound toroidal or U-shaped cores.

The ratio of the turns of one primary winding to the number of turns of its associated secondary winding may be selected so as to provide the desired step-down or step-up ratio. In an example, the primary winding has 1 turn and the secondary winding 3 turns.

In an embodiment, the ferrite core comprises first and second E-shaped parts with an air gap. In an alternative embodiment, the ferrite core is used in a planar transformer design. For example, the ferrite core comprises a first E-shaped part and a second planar, e.g. cuboid, part.

In an embodiment, the one or more primary windings are formed in a coil former and the one or more secondary windings are formed in a coil former.

In an embodiment for planar transformer designs, the one or more primary windings are formed on or in a circuit board, e.g. a printed circuit board, and the one or more secondary windings are formed on or in the circuit board.

The ferrite material of the core comprises a soft magnetic ferrite. An example of a ferrite material that has a relative permeability at 77K, µᵣ(77K), wherein 50 ≤ µᵣ (77K) ≤ 1000 for the ferrite core is a manganese zinc ferrite. A manganese zinc ferrite comprises an oxide made from iron, manganese and zinc. An example of such a manganese zinc ferrite is the commercially available ferrite available under the trade name N87.

The invention also provides for the use of the transformer of any one of the embodiments described herein in a circuit operating at cryogenic temperatures in the range of 2K to 230K, preferably 25K to 150K.

The invention also provides for the use of the transformer of any one of the embodiments described herein in a circuit operating at temperatures in the range of 25K to 373K.

The circuit may have different topologies. In some embodiments, the circuit comprises an inverter or an AC/AC converter or a power supply or a DC/DC converter or an AC/DC converter or an AC/DC converter with signal transmission. The circuit may be used in applications comprising potential separated information transmission or potential separated energy transmission.

In some embodiments, the circuit is configured to operate at a frequency in the range of 1 kHz to 900 kHz, preferably 100 kHz to 200 kHz. In an embodiment, the circuit is used as an auxiliary power supply and is configured to operate at a frequency in the range of 100 kHz to 200 kHz.

In an embodiment, the circuit comprises a single primary winding and a single secondary winding. Alternatively, the circuit comprises more than one primary winding and more than one secondary winding.

In some embodiments, the circuit comprises multiple outputs. Two or more of the multiple outputs may be coupled to a single primary winding or to more than one primary winding.

The primary winding and secondary winding are electrically isolated from one another. The secondary windings may be coupled to two or more output terminals. The output terminals are electrically isolated from the primary winding. In another embodiment, the output terminals are electrically isolated from the primary winding and from one another. In embodiments in which two or more secondary windings are provided, each of the secondary windings may be coupled to two or more output terminals.

In an embodiment, the circuit is used to provide an auxiliary voltage. This auxiliary voltage may be used in an auxiliary system, for example the auxiliary voltage may be supplied to an inverter. For example, the inverter may be used in a control system for controlling an electric motor. The electric motor may be used in an aircraft, e.g., in a propulsion drive of an aircraft or a propulsion hybrid drive of an aircraft or in an auxiliary drive of an aircraft. The aircraft may be a fixed-wing aeroplane, for example. The circuit may be used for any type of isolated power transmission in auxiliary power applications or low power applications.

The invention also provides a method of producing a transformer for use at cryogenic temperatures. The method comprises providing a soft magnetic material for a core of the transformer, the soft magnetic material comprising a relative permeability at 77K, µᵣ(77K), wherein 50 ≤ µᵣ (77K) ≤ 1000, forming the core from the soft magnetic material, the core having an airgap, forming at least one primary winding on a coil former and forming at least one secondary winding on a coil former, or, for a planar transformer, forming at least one primary winding on or in a circuit board, e.g. printed circuit board, and forming at least one secondary winding on or in the circuit board.

In an embodiment, the soft magnetic material comprises a manganese zinc ferrite, e.g. an oxide made from iron, manganese and zinc, such as N87.

In an embodiment, the forming the core from the material comprises providing the material in powder form, pressing the powder to form a green body and sintering the green body to form a sintered ferrite core.

The method may also comprise electrically isolating the primary winding and secondary winding. The secondary windings may be coupled to two or more output terminals. The output terminals may be electrically isolated from one another. In embodiments in which two or more secondary windings are provided, each of the secondary windings may be coupled to two or more output terminals.

The primary winding(s) and secondary winding(s) may be electrically isolated from one another. The output terminals of one secondary winding may be electrically isolated from one another and from the output terminals coupled to the other secondary windings.

Two or more primary windings may have the same potential and two or more secondary windings may have the same potential. In these embodiments, the primary winding(s) are electrically isolated from the secondary winding(s).

The invention solves problems coming with cryogenic temperature operation including:
- reduction of the permeability µr which leads to low inductance;
- low saturation currents of small nanocrystalline and amorphous cores;
- high weight and large size of nanocrystalline and amorphous cores compared to ferrite cores for low power transformers;
- high winding effort as there are no standard coil formers for multi-output transformers for use with nanocrystalline and amorphous cores available;
- high isolation effort as nanocrystalline and amorphous cores are usually not isolated.

Embodiments will now be described with reference to the figures in which:

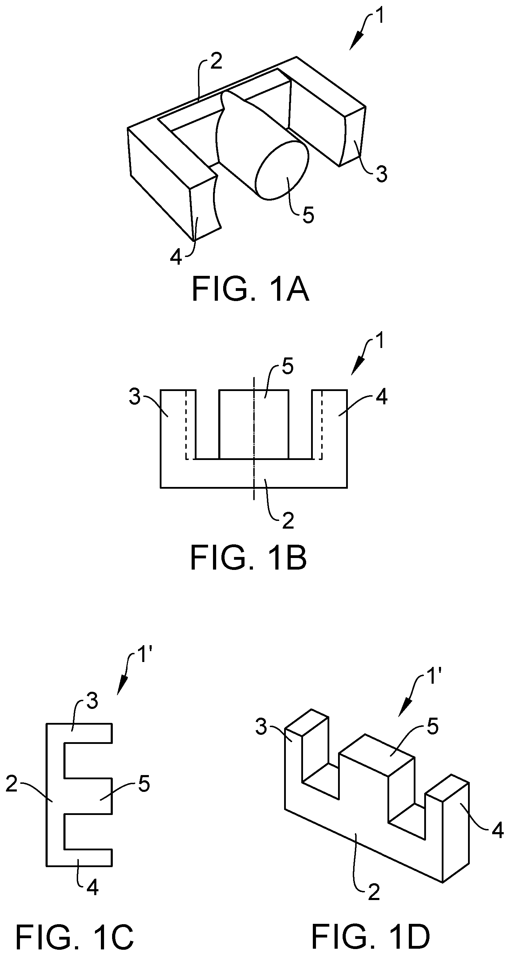

Fig. 1 illustrates view of E-shaped cores for use in a transformer operating in a circuit at cryogenic temperatures, and

The invention addresses the issue of the impact of the temperature-dependent reduction in relative permeability µᵣ of the soft magnetic core of a transformer, that is caused by the cryogenic temperatures, on the effective inductance value of the transformer. This impact is mitigated according to the invention by including an airgap in the core. This air gap is not temperature sensitive. Consequently, the impact of the reduction of the relative permeability, µᵣ, of the core material on the overall inductance is lowered because the airgap shows a high percentage of the complete magnetic loop resistance.

A sufficiently high µᵣ value is provided for the intended application by suitably selecting the soft magnetic material of the core, for example by suitably selecting a soft magnetic ferrite material. The value of the high temperature µr of the core material is less important than the lower (residual one) at cryogenic temperatures. This enables the use of ferrite materials in a cryogenic environment and the design of small, lightweight and easy-to-mount transformers based on ferrite materials. Higher specific magnetic losses at cryogenic temperatures are less important because of the lower mass of small ferrite cores compared to the smallest nanocrystalline or amorphous ones. Coil formers for isolated transformers and some available transformer components for the industry and automotive temperature range are applicable again because the cores are applicable again according to the approach.

Fig. 1 includes Figs 1A to 1D and illustrates views of ferrite cores 1 for use in a transformer operating in a circuit at cryogenic temperatures, i.e. in a temperature range of 2K to 230K. The topology of the core 1 may be selected depending on the operating temperature range. The cores illustrated in Fig. 1 are examples of cores 1 that may be fabricated using the principles of the present invention. Other types of cores may be used.

Fig. 1A illustrates a perspective view and Fig. 1B illustrates a side view of a E-shaped core 1 according to a first embodiment. The E-shaped core 1 includes a base portion 2, and two distal portions 3, 4 which extend from opposing distal ends of the base portion 2 and from the same side of the base portion 2. A centre portion 5 extends from this side of the base portion 2 and is positioned approximately equidistantly between the two distal portions 3, 4 to form the E-shape. In this embodiment, the base portion 2 and the distal portions 3, 4 have a rectangular cross-section and the centre portion 5 has a circular cross-section. The diameter of the centre portion 5 is greater than the width and approximately the same as the breadth of the distal portions 3, 4.

In an embodiment, two of these E-shaped cores 1 may be used to form a transformer core with an air gap. In an alternative embodiment, one E-shaped core part 1 is used with a planar core part to provide a core for a planar transformer which has an airgap between the E-shaped core part 1 and the planar core part.

In an embodiment, the core 1 comprises an air gap that is formed in the centre portion 5 of the core. This air gap may be ground into the centre portion 5 of the core. In another alternative embodiment, two or more air gaps are distributed throughout the core. This embodiment may be used for higher power. These distributed air gaps are preferred for tolerance reasons. Distributed air gaps may be used for larger cores.

Fig. 1C illustrates a side view and Fig. 1D illustrates a perspective view of a E-shaped core 1' according to a second embodiment. Similar to the first embodiment, the E-shaped core 1' includes a base portion 2, and two distal portions 3, 4 which extend from opposing distal ends of the base portion 2 and from the same side of the base portion 2. A centre portion 5 extends from this side of the base portion 2 and is positioned approximately equidistantly between the two distal portions 3, 4 to form the E-shape. In the second embodiment, the centre portion 5 as well as the base portion 2 and the distal portions 3, 4 have a rectangular cross-section. The width of the centre portion 5 is greater than the width of the distal portions 3, 4. The breadth of the centre portion 5 is approximately the same as the breadth of the distal portions 3, 4.

In an embodiment, two of these E-shaped cores 1' may be used to form a transformer core with an airgap in the two E-shaped cores 1'. In an alternative embodiment, one E-shaped core 1' is used with a planar core to provide a core for a planar transformer which has an airgap between the E-shaped core 1' and the planar core.

The transformer core 1, 1' of any one of the embodiments described herein may comprise a soft magnetic ferrite material. An example of a ferrite material group is manganese zinc ferrites. An example of a manganese zinc ferrite is MnₐZn(1-a)Fe₂O₄. A further example of a suitable manganese zinc ferrite is commercially available under the trade name N87.

For example, N87 typically decreases its relative permeability µr from the datasheet value 2200 at room temperature to a value in the range of 200 to 400 at cryogenic temperatures, e.g. at 70 to 100K. This relative permeability is suitable for a transformer core with an air gap which is to be used in a circuit operating at cryogenic temperatures.

Other types of ferrite materials may be used. For example, nickel-zinc-ferrites, e.g. with a composition of NiₐZn₍₁₋ₐ₎Fe₂O₄. Proper selection of the core material and careful design lead to optimized performance of the transformer for cryogenic environment. Manganese zinc ferrites typically have a higher permeability ad a higher saturation magnetization than nickel zinc ferrites. The electrical conductivity of nickel zinc ferrites is lower than that of manganese ferrites so that nickel zinc ferrites are suitable for higher frequency applications.

Taking advantage of the values of the cryogenic µᵣ(77K) of a ferrite material, results in a transformer design which is much more compact and lightweight as a pure air core design and comes with much lower turns count of the winding to show the same inductance. Also, interwinding capacitances and copper losses are minimized. The overall transformer performance in a cryogenic environment is optimized by applying the right principles for the magnetic design according to the operating temperature.

Due to the provision of an air gap in the ferrite transformer core, the primary current ripple and the leakage inductance of a transformer is slightly higher at cryogenic temperatures than that achievable at room temperature due to the lower inductance. Also, the secondary voltage is less stiff because of the lower coupling factor (coupling of primary side to secondary side).

To summarize, the invention provides an approach to minimize the impact of µr degradation of (ferrite) materials in cryogenic temperatures on the overall primary inductance of the transformer while using the residual µr of the core to ensure sufficient minimal inductance. The invention also provides an approach for a cryo-suitable auxiliary transformer with isolated multiple outputs, high isolation voltage and low coupling capacitance. The invention also enables the use of industrial COTS ferrite parts and coil formers for the design to minimize size and weight for a component in the low power (auxiliary supply) range.

### List of reference signs:

- 1: E-shaped core according to a first embodiment
- 1': E-shaped core according to a second embodiment
- 2: base portion
- 3: distal end
- 4: distal end
- 5: centre portion

## Claims

1. A transformer for use at cryogenic temperatures, the transformer comprising:
a ferrite core (1) with an air gap and comprising a relative permeability at 77K, µᵣ(77K), wherein 50 ≤ µᵣ (77K) ≤ 1000;
at least one primary winding;
at least one secondary winding.

2. The transformer according to claim 1, wherein the ferrite core (1) comprises first and second parts with an air gap.

3. The transformer according to claim 1 or claim 2, wherein the ferrite core (1) comprises a soft magnetic ferrite.

4. Use of the transformer of any one of claims 1 to 3 in a circuit operating at cryogenic temperatures in the range of 25K to 100K.

5. The use according to claim 4, wherein the circuit comprises an inverter or an AC/AC converter or a DC/DC converter or a AC/DC converter with signal transmission or for applications comprising potential separated information transmission or potential separated energy transmission.

6. The use according to claim 4 or claim 5, wherein the circuit operates at a frequency in the range of 100 kHz to 200 kHz.

7. The use according to any one of claims 4 to 6, wherein the circuit supplies multiple electrically isolated output voltage.

8. The use according to any one of clams 4 to 7, wherein the circuit provides an auxiliary voltage for use in an inverter.

9. The use according to claim 8, wherein the inverter forms part of a control system for a propulsion drive or an auxiliary drive of an aircraft.

10. A method of producing a transformer for use at cryogenic temperatures, the method comprising:
providing a soft magnetic material for a core (1) of the transformer, the soft magnetic material comprising a relative permeability at 77K, µᵣ(77K), wherein 50 ≤ µᵣ (77K) ≤ 1000, wherein the soft magnetic material comprises a soft magnetic ferrite,
forming the core (1) from the soft magnetic material, the core (1) having an airgap;
forming at least one primary winding on a coil former; or in a circuit board
forming at least one secondary winding on a coil former or in a circuit board.
